# EUROPÄISCHE PATENTSCHRIFT

(11) **EP 2 448 796 B1**
(45) Veröffentlichungstag und Bekanntmachung des Hinweises auf die Patenterteilung: **17.04.2013**
(21) Anmeldenummer: 10725208.2
(22) Anmeldetag: 24.06.2010
(51) Int. Cl.: B60T 8/48, B60T 8/88, B60T 8/36

(54) **DRUCKSTEUERVENTILANORDNUNG MIT DRUCKMITTELKANAL MIT OVALEM QUERSCHNITT**
PRESSURE CONTROL VALVE ARRANGEMENT HAVING A PRESSURE MEDIUM CHANNEL OF OVAL CROSS-SECTION
ENSEMBLE MODULATEUR DE PRESSION POURVU D'UN CANAL DE FLUIDE SOUS PRESSION À SECTION TRANSVERSALE OVALE

(30) Priorität: 29.06.2009 DE 102009030901
(43) Veröffentlichungstag der Anmeldung: 09.05.2012
(73) Patentinhaber: KNORR-BREMSE Systeme für Nutzfahrzeuge GmbH, 80809 München (DE)
(72) Erfinder: GREBE, Jan, 80939 München (DE); BRENNER, Dirk, 70563 Stuttgart (DE); WEIPPERT, Jochen, 80805 München (DE); ROHN, Wolfgang, 81247 München (DE); JAEHNS, Harald, 81549 München (DE)
(74) Vertreter: Schönmann, Kurt
(86) Internationale Anmeldenummer: PCT/EP2010/059021
(87) Internationale Veröffentlichungsnummer: WO 2011/000779

(56) Entgegenhaltungen:
- DE-A1- 3 444 865
- DE-A1- 10 156 773
- DE-A1- 19 701 200
- DE-A1- 19 816 289
- DE-A1-102005 049 654
- US-A- 5 673 978
- US-A1- 2002 171 287
- US-A1- 2005 087 243

## Beschreibung

Die Erfindung betrifft eine Drucksteuerventilanordnung zur Steuerung des Fluiddrucks in einer ABS-Bremsanlage eines Fahrzeugs, gemäß dem Oberbegriff von Anspruch 1.

Ein ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

ABS-Drucksteuerventilanordnungen ohne Relaiswirkung, auf welche sich die vorliegende Erfindung bezieht, finden bei Fahrzeugen wie beispielsweise Nutzfahrzeugen, Omnibussen, Sattelzugmaschinen wie auch bei Anhängern Verwendung. Drucksteuerventilanordnungen ohne Relaiswirkung verfügen meist über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Drucksteuerventile der gattungsgemäßen Art als 1-Kanal-Drucksteuerventile für Blockierschutzanlagen von Kraftfahrzeugen weisen innerhalb des Gehäuses je ein Membranventil als Halteventil und als Auslassventil auf sowie je ein elektromagnetisches Steuerventil für das Halteventil und das Auslassventil auf. Die beiden Membranventile beinhalten jeweils eine mit dem Druck in einer Steuerkammer beaufschlagbare Membrane, wobei die Steuerkammer durch einen am Gehäuse befestigten Deckel nach außen hin verschlossen ist.

Eine gattungsgemäße Drucksteuerventilanordnung einer ABS-Bremsanlage ist beispielsweise aus EP 0 266 555 A1 oder aus DE 101 56 773 A1 bekannt. Bei den Drucksteuerventilanordnungen des Stands der Technik sind die beiden Membranventile meist am Gehäuse seitlich angeordnet, wobei die entsprechenden Vorsteuerräume durch seitlich am Gehäuse befestigte Deckel verschlossen sind. Diese Deckel werden durch Urformverfahren wie Spritzgießen hergestellt. Weiterhin sind im Gehäuse Druckmittelkanäle ausgebildet, um innerhalb des Gehäuses Druckmittel von und zu den verschiedenen Anschlüssen der Drucksteuerventilanordnung bzw. zu und von den Membranventilen bzw. von und zu den diese steuernden elektromagnetischen Ventile zu führen.

Die Druckmittelkanäle im Gehäuse der Drucksteuerventilanordnung gemäß EP 0 266 555 A1 werden spanabhebend gefertigt und verlaufen bevorzugt in vertikaler und/oder in horizontaler Richtung, weil dann das Gehäuse während der spanabhebenden Fertigung der Druckmittelkanäle beispielsweise durch ein Bearbeitungszentrum nicht umgespannt werden muss. Eine Umlenkung eines Druckmittelkanals wird daher bewerkstelligt, indem sich je eine vertikale und eine horizontale Bohrung überschneiden. Strömungstechnisch problematisch stellt sich eine daraus hervorgehende Umlenkung eines Druckmittelkanals dar, weil die Umlenkung im Schnittbereich zwischen der vertikalen und der horizontalen Bohrung abrupt erfolgt und sich durch die abrupte Umlenkung relativ große Strömungsverluste ergeben. Weil aber bei Drucksteuerventilanordnungen von ABS/ASR-Systemen eine hohe Dynamik gefordert ist und beispielsweise im Rahmen der Funktion "Drucksenken" bei einem Überschreiten des zulässigen Radschlupfes eine möglichst schnelle Entlüftung des betreffenden Bremszylinders gefordert ist, sind solche durch Umlenkungen bedingte Strömungsverluste möglichst gering zu halten.

Weil die Einbaumaße einer solchen Drucksteuerventilanordnung, insbesondere deren Einbaubreite aufgrund beengter Platzverhältnisse standardisiert sind und nicht veränderbar sind, kann eine Lösung dieses Problems nicht darin bestehen, die Strömungsquerschnitte der Druckmittelkanäle zu vergrößern.

In der DE 10 2005 049 654 A1 wird eine Ventil-Zylinder-Einheit mit einem im Urformverfahren hergestellten Druckmittelverteiler beschrieben, welcher einerseits eine Zylinder-Kolbeneinheit und andererseits in Längsrichtung, d.h. gerade verlaufende Druckmittelkanäle aufweist, welche einen von einem Kreisquerschnitt abweichenden Querschnitt, bevorzugt einen ovalen oder langlochartigen Querschnitt aufweisen.

Die DE 34 44 865 A1 beschreibt ein druckmittelbetätigtes Membranventil mit Druckmittelkanälen mit kreisförmigem Querschnitt, welche eine Umlenkung von einer Richtung in eine demgegenüber um ca. 90 Grad winkelig angeordnete Richtung aufweisen.

Der Erfindung liegt demgegenüber die Aufgabe zugrunde, eine Drucksteuerventilanordnung der eingangs erwähnten Art derart weiter zu bilden, dass die Strömungsverluste bzw. der Strömungswiderstand insbesondere in eine Druckmittelströmung umlenkenden Druckmittelkanälen geringer wird. Dabei soll der Herstell- und Fertigungsaufwand der diese Aufgabe lösenden Mittel möglichst gering sein.

Diese Aufgabe wird erfindungsgemäß durch die Merkmale von Anspruch 1 gelöst.

### Offenbarung der Erfindung

Die Erfindung schlägt vor, dass der Druckmittelkanal zusammen mit dem Gehäuse durch Urformen hergestellt ist, wobei der Querschnitt des Druckmittelkanals oval ausgebildet und das größere Maß des ovalen Querschnitts und die Mittelachse des Druckmittelkanals in einer gemeinsamen Ebene angeordnet sind und das kleinere Maß des ovalen Querschnitts senkrecht zu dieser Ebene ist.

Dadurch baut der Druckmittelkanal gemessen an seinem Strömungsquerschnitt senkrecht zu der die Mittelachse enthaltenden Ebene schmäler, was im Hinblick auf den begrenzten Einbauraum solcher Drucksteuerventilanordnungen von Vorteil ist. Daher können auch mehrere solcher Druckmittelkanäle mit ihrem jeweils kleineren Maß b nebeneinander angeordnet werden, ohne dass die Dimension der Drucksteuerventilanordnung in dieser Richtung zu groß wird bzw. der Durchmesser benachbarter Druckmittelkanäle kann größer ausfallen.

Andererseits kann bedingt durch das Urformen des Druckmittelkanals zusammen mit dem Gehäuse auf eine spanabhebende Fertigung vertikaler und horizontaler Abschnitte des Druckmittelkanals und den damit verbundenen relativ hohen Strömungsverlusten verzichtet werden. Vielmehr kann die Umlenkung der Strömung des Druckmittels innerhalb des Druckmittelkanals ausgehend von dem in der einen Richtung führenden Abschnitt in den in der anderen Richtung führenden Abschnitt aufgrund der durch das Urformen gegebenen Möglichkeit einer Verwendung von freien Flächen nach strömungstechnischen Gesichtspunkten optimiert werden.

Daher weist der Druckmittelkanal eine knieförmige Druckmittelleitfläche zur Umlenkung der Strömung des im Druckmittelkanal geführten Druckmittels von dem in der einen Richtung führenden Abschnitt in den in der anderen Richtung führenden Abschnitt auf.

Die strömungsleitende bzw. strömungsumlenkende und knieförmig ausgestaltete Druckmittelleitfläche des Druckmittelkanals an der Umlenkung der Strömung von dem in der einen Richtung führenden Abschnitt in den in der anderen Richtung führenden Abschnitt kann dann bevorzugt so gestaltet werden, dass die in dem Druckmittelkanal auftretenden Strömungsverluste bzw. die Strömungswiderstände reduziert werden.

Aufgrund des reduzierten Strömungswiderstands ergibt sich folglich bei unverändertem Strömungsquerschnitt des betreffenden Druckmittelkanals eine verbesserte Dynamik der Drucksteuerventilanordnung, welche sich hinsichtlich der geforderten schnellen Abfolge von Phasen des Druckabbaus, des Druckhaltens und Drucksteigerns positiv auswirkt.

Durch die in den Unteransprüchen aufgeführten Maßnahmen sind vorteilhafte Weiterbildungen und Verbesserungen der in Anspruch 1 angegebenen Erfindung möglich.

Bevorzugt ist der Querschnitt des Druckmittelkanals als Sonderfall eines ovalen Querschnitts elliptisch ausgebildet, wobei wiederum das größere Maß (Hauptachse) des elliptischen Querschnitts und die Mittelachse des Druckmittelkanals einer gemeinsamen Ebene angeordnet sind und das kleinere Maß (Nebenachse) des elliptischen Querschnitts senkrecht zu dieser Ebene ist.

Bevorzugt beträgt die Umlenkung der Strömung des Druckmittels innerhalb des Druckmittelkanals im wesentlichen 90 Grad.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig. 2a: eine schematische Darstellung einer einen Bremszylinder ansteuernden Drucksteuerventilanordnung im geöffneten Zustand (Druckaufbau),
- Fig. 2b: eine schematische Darstellung der Drucksteuerventilanordnung von Figur 2a im geschlossenen Zustand (Druckabbau),
- Fig.3: eine Seitenansicht einer konkreten Ausführung der Drucksteuerventilanordnung von Fig.2a und Fig.2b gemäß einer bevorzugten Ausführungsform der Erfindung;
- Fig.4: eine Schnittdarstellung entlang der Linie IV-IV von Fig.3;
- Fig.5: eine perspektivische Darstellung eines in einem Gehäuse der Drucksteuerventilanordnung von Fig.3 ausgebildeten Druckmittelkanals.

### Beschreibung des Ausführungsbeispiels

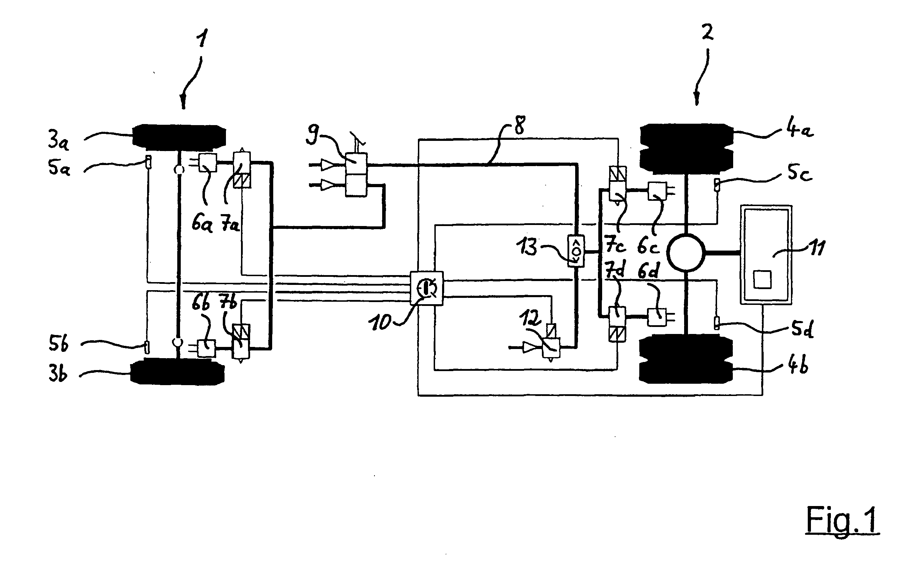

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7 d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

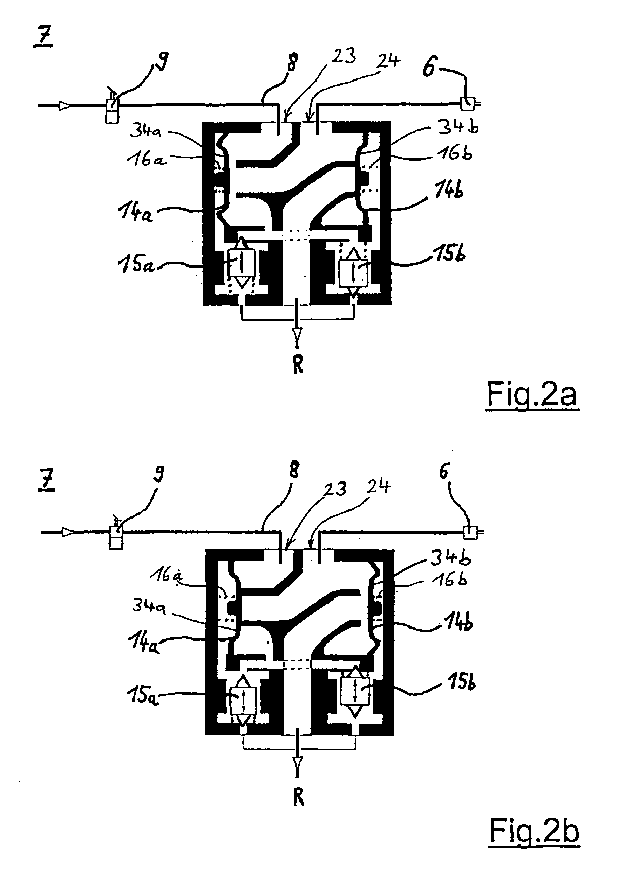

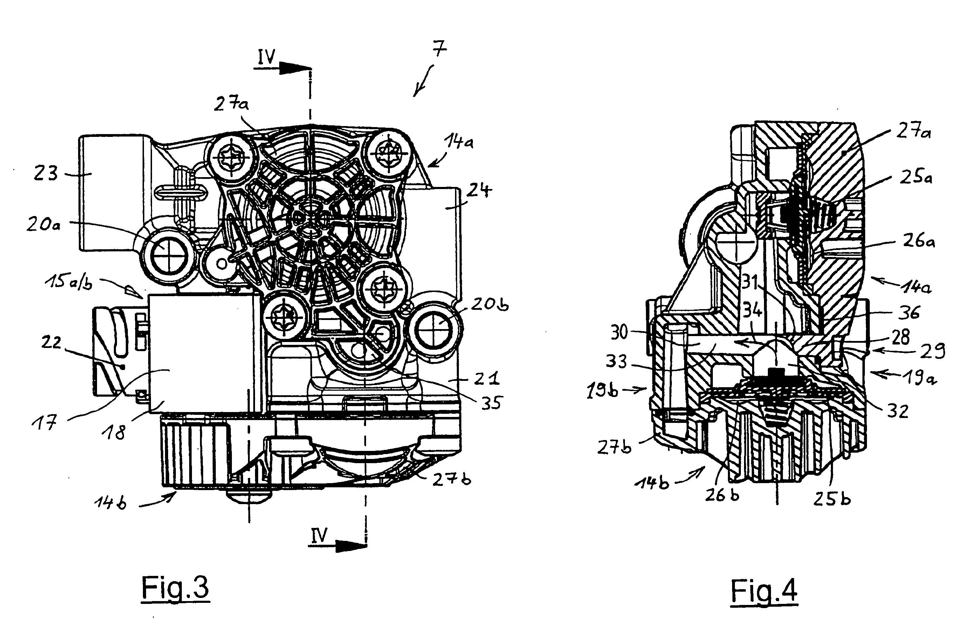

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zweck mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Fig.2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Die Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Fig. 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 15a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

In Fig.3 bis Fig.5 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

Die beiden Elektromagnetventile 15a, 15b weisen einen in einem Block 17 zusammengefassten Doppelmagneten 18 mit zwei Magnetspulen auf, welche mit zwei Magnetventilsitzen zusammen wirken. Durch Bestromung der Magnetspulen werden mit den Magnetventilsitzen der Elektromagnetventile 15a, 15b zusammen wirkende und hier nicht explizit gezeigte Magnetanker als Ventilschließglieder betätigt.

Der den Doppelmagneten 18 umfassende Block 17 ist an einem Gehäuse 21 der Drucksteuerventilanordnung 7 vorzugsweise frontseitig befestigt und weist einen Steckeranschluss 22 zur Stromversorgung des Doppelmagneten 18 auf. Dieses Gehäuse 21 weist weiterhin einen Druckmittelanschluss 23 zur Druckbeaufschlagung und/oder Druckentlastung der Drucksteuerventilanordnung 7 sowie einen Arbeitsanschluss 24 zum Anschluss des Bremszylinders 6 auf (Fig.3).

Der Druckmittelanschluss 23 ist, wie Fig.2a und Fig.2b zeigen, über die Bremsdruckleitung 8 mit dem Fuß- oder Betriebsbremsventil 9 der druckmittelbetätigten Bremseinrichtung verbunden und wird entsprechend einer Betätigung des Fußbremsventils 9 be- oder entlüftet.

Wie insbesondere aus Fig.3 hervorgeht, ist das Gehäuse 21 mit wenigstens einer, hier beispielsweise zwei in beide Seitenflächen 19a, 19b des Gehäuses 21 mündenden Durchgangsbohrungen 20a, 20b versehen, durch welche Haltemittel zum Halten der Drucksteuerventilanordnung an einem Trägerkörper, beispielsweise an einem Chassis des Fahrzeugs hindurch ragen, beispielsweise Schrauben. Die Mittelachsen der beiden Durchgangsbohrungen 20a, 20b sind bevorzugt parallel zueinander. Die axiale Länge der Durchgangsbohrungen 20a, 20b gilt als standardisiertes Einbaumaß der Drucksteuerventilanordnung 7 und ist aus Platzgründen festgelegt und nicht veränderbar, sie legt die maximal zulässige Breite B des Gehäuses 21 fest.

Das eine Membranventil 14a ist bevorzugt seitlich und das andere Membranventil 14b bevorzugt bodenseitig am Gehäuse 21 angeordnet, wie Fig.4 zeigt. Ein solches Membranventil 14a, 14b weist als Ventilkörper eine Membrane 25a, 25b auf, die durch Einleiten von Druckmittel in eine Steuerkammer 26a, 26b beaufschlagbar ist, die gehäuseaußenseitig jeweils durch einen mittels Urformen wie Spritzgießen hergestellten Deckel 27a, 27b abgedeckt ist, welcher am Gehäuse 21 befestigt ist. Dabei wird die Steuerkammer 26a, 26b zwischen der Membrane 25a, 25b und dem Deckel 27a, 27b ausgebildet.

Wie insbesondere aus Fig.4 hervorgeht, weist der die Steuerkammer 26a des seitlich angeordneten Membranventils 14a verschließende Deckel 27a einen Vorsprung oder Zapfen 28 auf, welcher von außen her in eine Mündungsöffnung 29 eines gehäuseseitigen Druckmittelkanals 30 hinein ragt. An dem Vorsprung 28 ist eine Druckmittelleitfläche 31 zur Lenkung der Strömung des im Druckmittelkanal 30 geführten Druckmittels ausgebildet.

Durch den Druckmittelkanal 30 soll bevorzugt eine Umlenkung der Strömung des Druckmittels ausgehend von einem in einer Richtung führenden stromaufwärtigen Teil des Druckmittelkanals 30 in einen in einer anderen Richtung führenden stromabwärtigen Teil des Druckmittelkanals 30 stattfinden.

Im bevorzugten Ausführungsbeispiel findet durch den Druckmittelkanal 30 beispielsweise eine 90-Grad-Umlenkung der Strömung des Druckmittels von einem ersten, in Fig.4 vertikalen Abschnitt 32 des Druckmittelkanals 30, welcher mit einem Ventilsitz des als Auslassventil fungierenden Membranventils 14a in Strömungsverbindung steht, dessen Steuerkammer 26a durch den Deckel 27a abgedeckt ist, in einen in Fig.4 horizontalen Abschnitt 33 des Druckmittelkanals 30 statt, welcher mit einem am Gehäuse 21 ausgebildeten und hier nicht explizit sichtbaren Entlüftungsanschluss in Strömungsverbindung steht, wie der die Strömungsrichtung symbolisierende Pfeil 34 in Fig.4 veranschaulicht.

Der horizontale Abschnitt 33 des Druckmittelkanals ist dabei vom Inneren des Gehäuses 21 gesehen bis an die Mündungsöffnung 29 in der Seitenfläche 19a des Gehäuses 21 erweitert. In diese Mündungsöffnung 29 ragt der Vorsprung 28 des Deckels 27a zapfenartig hinein.

Im vorliegenden Fall ist der Druckmittelkanal 30 daher bevorzugt ein Entlüftungskanal, welcher Druckluft von dem an einen Bremszylinder angeschlossenen Arbeitsanschluss 24 über das als Membranventil 14a ausgeführte Auslassventil einer Entlüftung der Drucksteuerventilanordnung 7 zuführt.

Die Druckmittelleitfläche 31 des Vorsprungs 28 ist ausgebildet, um die Strömung des Druckmittels von der einen Richtung (hier vertikale Richtung) in die andere Richtung (hier horizontale Richtung) umzulenken bzw. eine solche Umlenkung zu unterstützen, vorzugsweise durch eine sphärische Fläche.

Besonders bevorzugt wird der mit dem Vorsprung 28 und der Druckmittelleitfläche 31 versehene Deckel 27a als einstückiger Spritzgussformling aus Kunststoff oder Metall ausgebildet.

Besonders bevorzugt dient der zentrale Bereich des Deckels 27a zur Abdeckung der Steuerkammer 26a und der Vorsprung 28 mit der Druckmittelleitfläche 31 ist an dem Deckel 27a randseitig ausgebildet, beispielsweise an einer Nase 35 des Deckels 27a, wie Fig.3 veranschaulicht. Eine entsprechende Dichtung 36 im Bereich der Mündungsöffnung 29 sorgt für eine Abdichtung des Druckmittelkanals 30 zur Außenseite hin.

Ein Deckel 27a mit Vorsprung 28 und Druckmittelleitfläche 31 ist nicht notwendigerweise auf eine Verwendung für einen Druckmittelkanal 30 mit einer 90-Grad-Umlenkung der Strömungsrichtung beschränkt. Vielmehr kann ein solcher Deckel 27a für jegliche Art von Druckmittelkanal 30, insbesondere auch für solche ohne Strömungsumlenkung verwendet werden, bei denen durch eine Druckmittelleitfläche eine Reduzierung des Strömungswiderstands erzielbar ist.

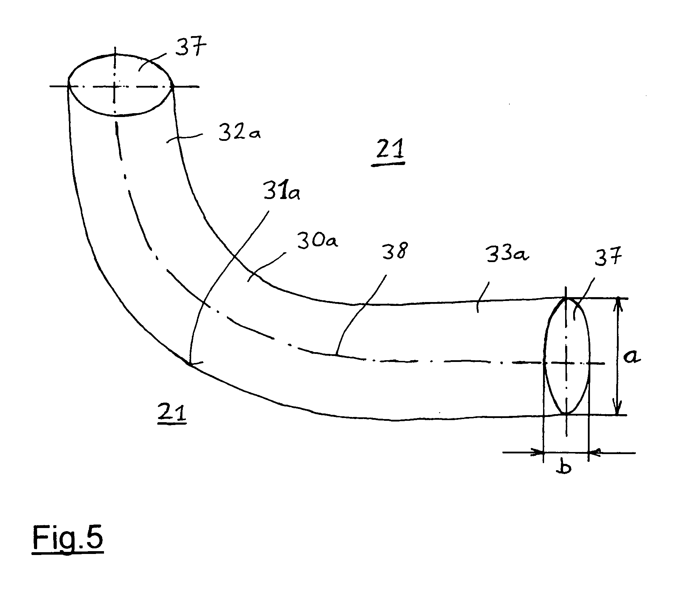

Gemäß einer in Fig.5 gezeigten Ausführungsform ist innerhalb eines im Gehäuse 21 ausgebildeten Druckmittelkanals 30a eine Umlenkung der Strömung des Druckmittels ausgehend von einem in einer Richtung führenden, hier beispielsweise vertikalen Abschnitt 32a des Druckmittelkanals 30a in einen in einer anderen Richtung führenden, hier beispielsweise horizontalen Abschnitt 33a des Druckmittelkanals 30a vorgesehen. Bevorzugt beträgt daher die Umlenkung der Strömung des Druckmittels innerhalb des Druckmittelkanals 30a im wesentlichen 90 Grad.

Der Druckmittelkanal 30a weist insbesondere eine knieförmige Druckmittelleitfläche 31a zur Umlenkung der Strömung des im Druckmittelkanal 30a geführten Druckmittels von dem in der einen Richtung führenden Abschnitt 32a in den in der anderen Richtung führenden Abschnitt 33a auf. Dabei wird der Druckmittelkanal 30a zusammen mit dem Gehäuse 21 durch Urformen hergestellt, bevorzugt als Spritzgußformling aus Metall.

Wie Fig.5 zeigt, ist der Querschnitt 37 des Druckmittelkanals 30a oval ausgebildet und das größere Maß a des ovalen Querschnitts 37 und die Mittelachse 38 des Druckmittelkanals 30a sind über die gesamte Länge des Druckmittelkanals 30a in einer gemeinsamen Ebene angeordnet, welche gemäß Fig.5 die Zeichenebene ist. Weiterhin ist das kleinere Maß b des ovalen Querschnitts 37 senkrecht zu dieser Ebene.

Besonders bevorzugt ist der Querschnitt 37 des Druckmittelkanals 30a als Sonderfall eines ovalen Querschnitts elliptisch ausgebildet, wobei wiederum das größere Maß (Hauptachse a) des elliptischen Querschnitts 37 und die Mittelachse 38 des Druckmittelkanals 30a in einer gemeinsamen Ebene angeordnet sind und das kleinere Maß (Nebenachse b) des elliptischen Querschnitts 37 senkrecht zu dieser Ebene ist.

Der ovale Querschnitt 37 kann allgemein eine, zwei oder auch überhaupt keine Symmetrieachsen aufweisen, wesentlich ist nur, dass das Maß b senkrecht zu der Ebene, welche die Mittelachse 38 des Druckmittelkanals 30a enthält, kleiner ist als das Maß a in dieser Ebene, wobei die Maße a und b jeweils die größten Erstreckungen des Querschnitts 37 in der jeweiligen Richtung darstellen.

### Bezugszeichenliste

| | |
|---|---|
| 1 | Vorderachse |
| 2 | Hinterachse |
| 3 | Rad |
| 4 | Rad |
| 5 | Drehzahlsensor |
| 6 | Bremszylinder |
| 7 | Drucksteuerventilanordnung |
| 8 | Bremsdruckleitung |
| 9 | Fußbremsventil |
| 10 | Steuereinheit |
| 11 | ASR-Einheit |
| 12 | ASR-Magnetventil |
| 13 | Wechselventil |
| 14 a/b | Membranventil |
| 15 a/b | Elektromagnetventil |
| 16 a/b | Federelement |
| 17 | Block |
| 18 | Doppelmagnet |
| 19 a/b | Seitenfläche |
| 20 a/b | Durchgangsbohrung |
| 21 | Gehäuse |
| 22 | Steckeranschluss |
| 23 | Druckmittelanschluss |
| 24 | Arbeitsanschluss |
| 25 a/b | Membrane |
| 26 a/b | Steuerkammer |
| 27 a/b | Deckel |
| 28 | Vorsprung |
| 29 | Mündungsöffnung |
| 30 a/b | Druckmittelkanal |
| 31 a/b | Druckmittelleitfläche |
| 32 a/b | Abschnitt |
| 33 a/b | Abschnitt |
| 34 | Pfeil |
| 35 | Nase |
| 36 | Dichtung |
| 37 | Querschnitt |
| 38 | Mittelachse |

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder (6) adaptiv anpassbar ist, wobei in einem Gehäuse (21) der Drucksteuerventilanordnung (7) wenigstens ein Druckmittel führender Druckmittelkanal (30a) ausgebildet und eine Umlenkung der Strömung des Druckmittels innerhalb des Druckmittelkanals (30a) ausgehend von einem in einer Richtung führenden Abschnitt (32a) des Druckmittelkanals (30) in einen in einer anderen Richtung führenden Abschnitt (33a) des Druckmittelkanals (30a) vorgesehen ist, **dadurch gekennzeichnet, dass** der Druckmittelkanal (30a) zusammen mit dem Gehäuse (21) durch Urformen hergestellt ist, wobei der Querschnitt (37) des Druckmittelkanals (30a) oval ausgebildet und das größere Maß (a) des ovalen Querschnitts und die Mittelachse (38) des Druckmittelkanals (30a) in einer gemeinsamen Ebene angeordnet sind und das kleinere Maß (b) des ovalen Querschnitts (37) senkrecht zu dieser Ebene ist, wobei der Druckmittelkanal (30a) eine knieförmige Druckmittelleitfläche (31 a) zur Umlenkung der Strömung des im Druckmittelkanal (30a) geführten Druckmittels von dem in der einen Richtung führenden Abschnitt (32a) in den in der anderen Richtung führenden Abschnitt (33a) aufweist.

2. Drucksteuerventilanordnung nach Anspruch 1, **dadurch gekennzeichnet, dass** der Querschnitt (37) des Druckmittelkanals (30) elliptisch ist.

3. Drucksteuerventilanordnung nach einem der vorhergehenden Ansprüche, **dadurch gekennzeichnet, dass** das Gehäuse (21) ein Spritzgußformling aus Metall ist.

4. Drucksteuerventilanordnung nach einem der vorhergehenden Ansprüche, **dadurch gekennzeichnet, dass** die Umlenkung der Strömung des Druckmittels innerhalb des Druckmittelkanals (30a) im Wesentlichen 90 Grad beträgt.

5. Drucksteuerventilanordnung nach einem der vorhergehenden Ansprüche, **dadurch gekennzeichnet, dass** in dem Gehäuse (21) wenigstens ein Membranventil (14a) aufgenommen ist.

6. Drucksteuerventilanordnung nach Anspruch 5, **dadurch gekennzeichnet, dass** wenigstens ein von einer elektronischen Steuereinrichtung (10) ansteuerbares elektromagnetisches Steuerventile (15a) zum Vorsteuern des Membranventils (14a) in dem Gehäuse (21) aufgenommen ist.

7. Bremsschlupfgeregelte und druckmittelbetätigte Bremseinrichtung eines Fahrzeugs, beinhaltend wenigstens eine Drucksteuerventilanordnung (7) nach einem der vorhergehenden Ansprüche.

## Claims

1. Pressure control valve assembly (7) for control of the fluid pressure in an ABS brake system of a vehicle in such a way that during a blocking tendency of individual wheels of the vehicle, the brake pressure in at least one associated brake cylinder (6) can be adaptively matched, with at least one pressurised-medium conduit (30a) being formed in a housing of the pressure control valve assembly for delivering a pressurised medium and with deflection of the flow of said pressurised medium inside said pressurised-medium conduit (30a) being provided which starts out from a section (32a) of said pressurised-medium conduit (30), that leads into a first direction, and is oriented into a section (33a) of said pressurised-medium conduit (30a), which extends into another direction, **characterized in that** said pressurised-medium conduit (30a) is manufactured together with said housing (21) by forming, with the cross-section (37) of said pressurised-medium conduit (30a) having an oval configuration and with the greater dimension (a) of said oval cross-section and the centre axis (38) of said pressurised-medium conduit (30a) being disposed in a common plane whilst the smaller dimension (b) of said oval cross-section is orthogonal on that plane, wherein said pressurised-medium conduit (30a) is provided with a bend-shaped baffle area (31a) for deflection of the flow of the pressurised medium delivered in said pressurised-medium conduit (30a) from said section (32a) leading in the first direction into said section (33a) leading into the other direction.

2. Pressure control valve assembly according to Claim 1, **characterized in that** the cross-section (37) of said pressurised-medium conduit (30) is elliptical.

3. Pressure control valve assembly according to any of the preceding Claims, **characterized in that** said housing (21) is an injection-moulded metal part.

4. Pressure control valve assembly according to any of the preceding Claims, **characterized in that** the deflection of the flow of said pressurised medium inside said pressurised-medium conduit (30a) amounts substantially to 90 degrees.

5. Pressure control valve assembly according to any of the preceding Claims, **characterized in that** at least one diaphragm valve (14a) is accommodated in said housing (21).

6. Pressure control valve assembly according to Claim 5, **characterized in that** at least one electromagnetic control valve (15a) controllable by an electronic controller means (10) is accommodated in said housing (21) for pilot control of said diaphragm valve (14a).

7. Brake system of a vehicle, controlled by brake slip and operated by a pressurised medium, including at least one pressure control valve assembly (7) according to any of the preceding Claims.

## Revendications

1. Ensemble vanne-pilote de pression (7) pour la régulation de la pression de fluide dans un système de frein ABS d'in véhicule d'une telle façon, qu'au cours de la tendance à bloquer des roues individuelles du véhicule, la pression de freinage dans au moins un cylindre de frein (6) affecté peut être adapté par voie adaptive, à au moins un conduit de milieu sous pression (30a) étant formé dans un carter de l'ensemble vanne-pilote de pression afin d'amener un milieu sous pression, et à une déviation du courant dudit milieu sous pression à l*intérieur dudit conduit de milieu sous pression (30a) étant prévue, qui commence à une partie (32a) dudit conduit de milieu sous pression (30), qui mène en une première direction, et qui est orienté dans une partie (33a) dudit conduit de milieu sous pression (30a), qui s'étend dans un autre direction, **caractérisé en ce que** ledit conduit de milieu sous pression (30a) est produit ensemble avec ledit carter (21) par façonnage, à la coupe transversale (37) dudit conduit de milieu sous pression (30a) ayant une configuration ovale et à la plus grande dimension (a) de ladite coupe transversale et l'axe médiane (38) dudit conduit de milieu sous pression (30a) étant disposés dans un plan commun, pendant que la plus petite dimension (b) de ladite coupe transversale ovale est orthogonal sur ce plan, dans lequel ledit conduit de milieu sous pression (30a) est muni d'une surface déflectrice (31a) ayant la forme élément coudé pour la déflection du courant du milieu sous pression, qui est mené dans ledit conduit de milieu sous pression (30a) à partir de ladite partie (32a) menant dans la première direction en ladite partie (33a) menant dans l'autre direction.

2. Ensemble vanne-pilote de pression selon la revendication 1, **caractérisé en ce que** la coupe transversale (37) dudit conduit de milieu sous pression (30) est elliptique.

3. Ensemble vanne-pilote de pression selon une quelconque des revendications précédentes, **caractérisé en ce que** ledit carter (21) est une pièce métallique moulée par injection.

4. Ensemble vanne-pilote de pression selon une quelconque des revendications précédentes, **caractérisé en ce que** la déflection du courant dudit milieu sous pression à l'intérieur dudit conduit de milieu sous pression (30a) correspond essentiellement à 90 degrés.

5. Ensemble vanne-pilote de pression selon une quelconque des revendications précédentes, **caractérisé en ce qu'**au moins une soupape à diaphragme (14a) est reçue dans ledit carter (21).

6. Ensemble vanne-pilote de pression selon la revendication 5, **caractérisé en ce qu'**au moins une vanne pilote électromagnétique (15a), commandable par un moyen de commande électronique (10), est reçue dans ledit carter (21) pour la commande pilote de ladite soupape à diaphragme (14a).

7. Système de frein d'un véhicule, réglé par dérapage au freinage commandé par un milieu sous pression, renfermant au moins un ensemble vanne-pilote de pression (7) selon une quelconque des revendications précédentes.
